# EUROPÄISCHE PATENTSCHRIFT

(11) **EP 1 235 036 B1**
(45) Veröffentlichungstag und Bekanntmachung des Hinweises auf die Patenterteilung: **22.03.2006**
(21) Anmeldenummer: 02002582.1
(22) Anmeldetag: 04.02.2002
(51) Int. Cl.: F24D 3/14

(54) **Betondecke**
Concrete ceiling
Plafond en béton

(30) Priorität: 05.02.2001 DE 10105090
(43) Veröffentlichungstag der Anmeldung: 28.08.2002
(73) Patentinhaber: Thermosoft Klimatechnik GmbH, 64646 Heppenheim (DE); DS-Plan Ingenieurgesellschaft für ganzheitliche Bauberatung und-planung mbH, 70569 Stuttgart (DE)
(72) Erfinder: Nüssle, Fritz, 71263 Weil der Stadt (DE); Oesterle, Eberhard, 70839 Gerlingen (DE)
(74) Vertreter: Preissner, Nicolaus

(56) Entgegenhaltungen:
- EP-A- 0 886 109
- EP-A- 0 895 033
- CH-A- 301 733
- DE-A- 2 336 902
- DE-A- 2 848 573
- DE-C- 712 000

## Beschreibung

Die vorliegende Erfindung betrifft eine Bauteil anordnung mit einem Bauteil zur Begrenzung eines Raumes, insbesondere in Form einer Betondecke oder einer Wand. Das Bauteil weist ein Rohrregister auf, das zur Temperierung des Raumes von einem Fluid durchströmbar ist.

Ein derartiges Bauteil in Form einer Betondecke ist beispielsweise aus der DE 198 32 289 A1 bekannt. Diese bekannte Betondecke ist etwa in ihrer Mitte mit einem Rohrregister versehen, das zur Temperierung von einem Fluid durchströmbar ist. Die Betondecke weist ein relativ hohes Wärmespeichervermögen auf und wirkt als temporärer Energiespeicher. Die der Betondecke zugeführte beziehungsweise entnommene Wärme muß daher zeitlich vorlaufend entsprechend den erwarteten thermischen Lasten gesteuert werden.

Die Leistungsfähigkeit der Betondecke in Hinsicht auf die Temperierung wird vor allem durch den langsamen Wärmeaustausch zwischen der Betondecke und dem diese umgebenden Luftvolumen begrenzt. Weiter stellt die bekannte Betondecke über ihre gesamte Fläche eine im wesentlichen gleichmäßige Temperatur bereit.
Eine Anpassung an spezielle Randbedingungen beispielsweise in einem Eckraum, in dem infolge von zwei nach außen gerichteten Fenstern ein erhöhter Wärmebedarf besteht, ist bei der bekannten Betondecke kaum möglich. Es müssen daher noch zusätzliche Heiz- oder Kühlkörper bereitgestellt werden.

Das Gleiche gilt für eine aus der DE 196 36 944 A1 bekannte Kühldecke, die als Sandwichkonstruktion ausgebildet ist. Die Kühldecke weist eine obere Trockenbauplatte und eine untere Trockenbauplatte auf, die durch Abstandshalter voneinander beabstandet sind. In dem auf diese Weise zwischen der oberen Trockenbauplatte und der unteren Trockenbauplatte gebildeten Hohlraum befinden sich Kühlrohrmatten, die zu einer Temperierung des gesamten Raumes dienen.

**Aufgabe** der vorliegenden Erfindung ist es, eine Bauteil anordnung bereitzustellen, die eine rasche, lokal begrenzte Temperierung des angrenzenden Raums ermöglicht. Es soll insbesondere eine Anpassung an unterschiedliche Temperaturanforderungen in dem Raum möglich werden, das heißt unterschiedlichen Anforderungen an die Temperierung in dem Raum Rechnung getragen werden.

Erfindungsgemäß wird diese Aufgabe bei einem Bauteil der eingangs genannten Art dadurch **gelöst**, daß mindestens ein Wärmetauscher vorgesehen ist, der beabstandet zu dem Rohrregister an einer dem Raum zugewandten Fläche des Bauteils angeordnet ist und die Fläche zur lokalen Temperierung des Raumes teilweise überdeckt. Dabei ist zwischen dem Wärmetauscher und dem Rohrregister eine Isolierschicht zur thermischen Isolierung angeordnet.

Eine derartige Bauteil anordnung beruht auf der Erkenntnis, daß durch das Rohrregister des Bauteils eine Grundtemperierung des Raumes stattfindet, wohingegen der an der dem Raum zugewandten Fläche des Bauteils angeordnete Wärmetauscher für eine lokal begrenzte Temperierung des Raumes sorgt. Auf diese Weise ist es möglich, die Temperierung an unterschiedliche Anforderungen in dem Raum speziell anzupassen. Das Vorsehen von zusätzlichen Heiz- oder Kühlaggregaten, etwa im Bereich von durch eine verhältnismäßig große Wärmestrahlung gekennzeichneten Fenstern, ist somit entbehrlich. Auf Grund der Isolierschicht, die zwischen dem Wärmetauscher und dem Rohrregister angeordnet ist, läßt sich die Temperierung des Wärmetauschers weitgehend unabhängig von der Temperatur des Rohrregisters einstellen. Eine rasche Temperierung des durch den Wärmetauscher beeinflußten Bereiches des Raumes ist somit sichergestellt.

Mit der erfindungsgemäßen Bauteil anordnung läßt sich eine Reihe von weiteren Vorteilen erreichen. So kann der Wärmetauscher bei der Herstellung des Bauteils eingebettet und damit integriert werden. Die Herstellung wird somit nicht verkompliziert. Zusätzlicher Platzbedarf ist nicht erforderlich. Weiterhin können die bisher erforderlichen Heiz- oder Kühlaggregate vollständig entfallen. Es müssen insbesondere keine Heizkörper mehr vor den Fenstern installiert werden, so daß sich ein optisch sehr ansprechender Eindruck ergibt. Die weiteren Flächen des Bauteils bleiben frei zugänglich. Es können insbesondere ohne Schwierigkeiten Verkabelungen verlegt werden. Die verhältnismäßig kleine Fläche des Wärmetauschers ermöglicht eine individuelle Temperierung. Auf Grund der Anordnung an der dem Raum zugewandten Fläche wird die Temperierung verbessert und beschleunigt. Zweckmäßigerweise kann der Wärmetauscher zur Verbesserung des optischen Eindrucks auch verputzt oder gestrichen werden.

Wegen der Isolierschicht kann die Temperatur des Wärmetauschers unabhängig von der Temperatur des Rohrregisters in dem Bauteil vorgegebenen werden. Ein unerwünschtes Heizen oder Kühlen des Rohrregisters bei einer abweichenden Temperatur des Wärmetauschers wird verhindert. Daher kann die Temperatur des Wärmetauschers rasch in Abhängigkeit von den herrschenden Randbedingungen angepaßt werden.

Vorteilhafte Ausgestaltungen und Weiterbildungen der Erfindung gehen aus den abhängigen Ansprüchen hervor.

Vorteilhaft weist der Wärmetauscher ein Rohrregister auf, das zur lokalen Temperierung des Raumes unabhängig von dem Rohrregister des Bauteils von einem Fluid durchströmbar ist. Bei dieser Ausgestaltung kann das im Regelfall in Gebäuden vorhandene warme oder kalte Wasser zur Temperierung verwendet werden. Wenngleich die Durchströmung durch das Rohrregister des Bauteils und den Wärmetauscher unabhängig voneinander erfolgt, kann zur Bereitstellung des für die Temperierung verwendeten Wassers aber eine einzige Einheit verwendet werden.

Gemäß einer vorteilhaften Weiterbildung umgibt die Isolierschicht den Wärmetauscher an allen Seiten mit Ausnahme der dem Raum zugewandten Fläche.

Von besonderem Vorteil ist femer, wenn sich das Rohrregister entlang der gesamten dem Raum zugewandten Fläche erstreckt, wobei vorzugsweise der Bereich des Wärmetauschers ausgespart ist.

In erster vorteilhafter Ausgestaltung ist der Wärmetauscher materialeinstückig mit dem Bauteil ausgebildet. Dies ist insbesondere bei einem Bauteil aus einem gießbaren Material wie einer Betondecke, -wand oder -säule vorteilhaft. Die einzelnen Bestandteile des Wärmetauschers werden dann vor dem Vergießen in die Schalung eingelegt und auf geeignete Weise fixiert. Die Ausbildung des Wärmetauschers erfolgt dann automatisch beim Gießen.

Bei dieser Ausgestaltung weist die Isolierschicht Ausnehmungen zum Durchtreten des bei der Herstellung des Bauteils verwendeten gießbaren Materials auf. Alternativ kann die Isolierschicht an einer oder mehreren Seiten des Wärmetauschers vollständig weggelassen werden. Der Wärmetauscher wird dann zuverlässig in das Bauteil eingebettet.

Nach einer zweiten vorteilhaften Ausgestaltung ist der Wärmetauscher als vorgefertigtes Element ausgebildet, das in das Bauteil einsetzbar ist. Dieses Element kann dann unabhängig von dem konkreten Bauvorhaben vorgefertigt werden. Eine aufwendige Fixierung der Einzelteile des Wärmetauschers vor dem Erstellen der Bauteil anordnung ist nicht erforderlich.

In vorteilhafter Weiterbildung weist das Element mindestens eine Hinterschneidung zur Fixierung in dem Bauteil auf. Durch diese Hinterschneidung wird eine formschlüssige Verankerung des Elements erreicht.

Das Element kann alternativ oder zusätzlich mittels Trägern an einer Bewehrungslage des Bauteils befestigt werden. Es wird insbesondere vorteilhaft von der unteren Bewehrungslage einer Betondecke abgehängt. Auch bei diesem Vorgehen wird eine zuverlässige Fixierung erreicht.

Vorteilhaft weist das Element eine eigene Bewehrungslage auf. Die Träger zur Befestigung an der Bewehrungslage des Bauteils können in diese Bewehrungslage eingehängt werden. Weiter wird eine hohe Steifigkeit und Belastbarkeit des Elements erreicht.

Das Bauteil kann als Wand, Säule, in Form von Stufen oder als Decke ausgeführt werden. Es kann aus verschiedenen Materialien bestehen, beispielsweise aus Ziegeln oder Beton. Zur Vereinfachung wird die Erfindung nachstehend beispielhaft an Hand einer Betondecke beschrieben. Diese Beschreibung ist nicht als Einschränkung des Schutzumfangs der vorliegenden Anmeldung zu verstehen.

Der Wärmetauscher beziehungsweise das die Rohre als Wärmetauscher umgebende Material sowie zumindest die dem Raum zugewandte Oberfläche des Bauteils sind vorteilhaft schallabsorbierend ausgebildet. Bei Verwendung von Beton werden durch Beimischung kleiner Steine Hohlräume gebildet, die Schall absorbieren. Neben der gezielten Erwärmung beziehungsweise Abkühlung wird somit auch der Schallpegel in dem Raum verringert.

Nachstehend wird die Erfindung an Hand mehrerer Ausführungsbeispiele beschrieben, die in schematischer Weise in der Zeichnung dargestellt sind. Für gleiche und funktionsidentische Bauteile werden hierbei durchgehend dieselben Bezugszeichen verwendet. Dabei zeigt:
- Figur 1: einen schematischen Schnitt durch ein Gebäude unter Verwendung der erfindungsgemäßen Betondecke;
- Figur 2: eine vergrößerte Darstellung eines Ausschnitts aus der Betondecke in erster Ausgestaltung;
- Figur 3: den Wärmetauscher gemäß Figur 2 vor der Herstellung der Betondecke und
- Figur 4: eine Ansicht ähnlich Figur 3 in zweiter Ausgestaltung.

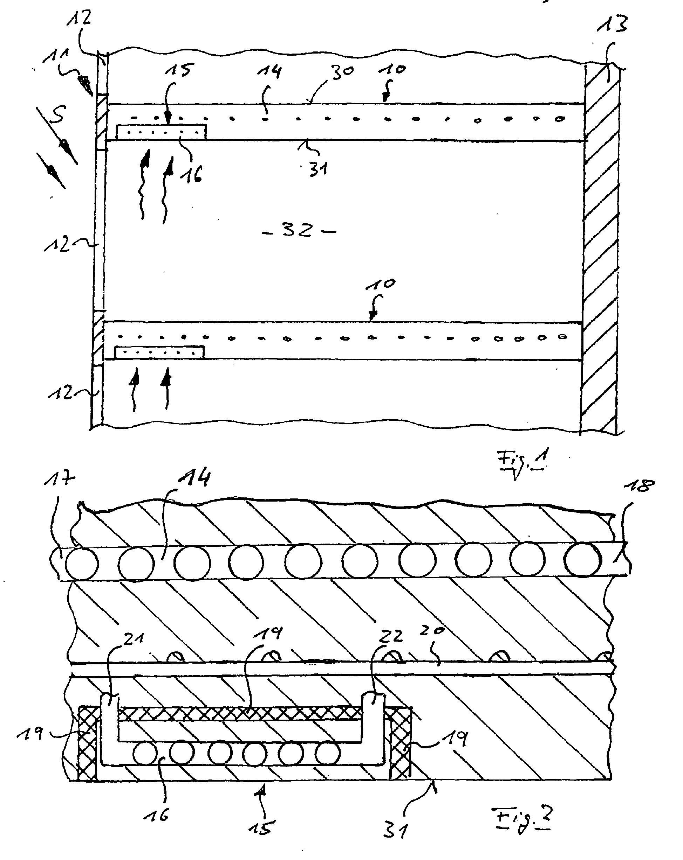

Figur 1 zeigt einen schematischen Schnitt durch ein Gebäude mit zwei Betondekken 10, einer Fassade 11 mit Glasflächen 12 und einer Rückwand 13, die einen Raum 32 begrenzen. Die Betondecke 10 weist etwa in ihrer neutralen Ebene, näherungsweise in der Mitte, ein Rohrregister 14 zur Temperierung auf. Über eine Oberseite 30 und eine Unterseite 31 der Betondecke 10 kann dann ein Wärmeaustausch mit dem umgebenden Luftvolumen stattfinden.

An der Unterseite 31 der Betondecke 10 ist im dargestellten Ausführungsbeispiel ein Wärmetauscher 15 eingebettet, der nur einen Teil der Unterseite 31 überdeckt und zur lokalen Temperierung des unterhalb der Betondecke 10 liegenden Raums 32 dient.

Bei Sonneneinstrahlung gemäß Pfeilrichtung S wird sich der Raum hinter den Glasflächen 12 stärker erwärmen als nahe der Rückwand 13. Es liegt daher eine unregelmäßige Temperaturverteilung vor. Die höhere Temperatur hinter den Glasflächen 12 wird durch die aufsteigenden Pfeife schematisch angezeigt. Zum Ausgleich der Temperaturunterschiede und zur Anpassung an die individuellen Bedürfnisse der jeweiligen Nutzer ist in dem Wärmetauscher 15 ein Rohrregister 16 vorgesehen. Dieses Rohrregister kann entsprechend den herrschenden Randbedingungen mit einem warmen oder kalten Fluid, insbesondere Wasser, durchströmt werden. Es kommt entsprechend zu einer Erwärmung beziehungsweise Abkühlung des Raums 32 unterhalb der Betondecke 10. Im dargestellten Ausführungsbeispiel wird der Wärmetauscher 15 zur Kühlung verwendet.

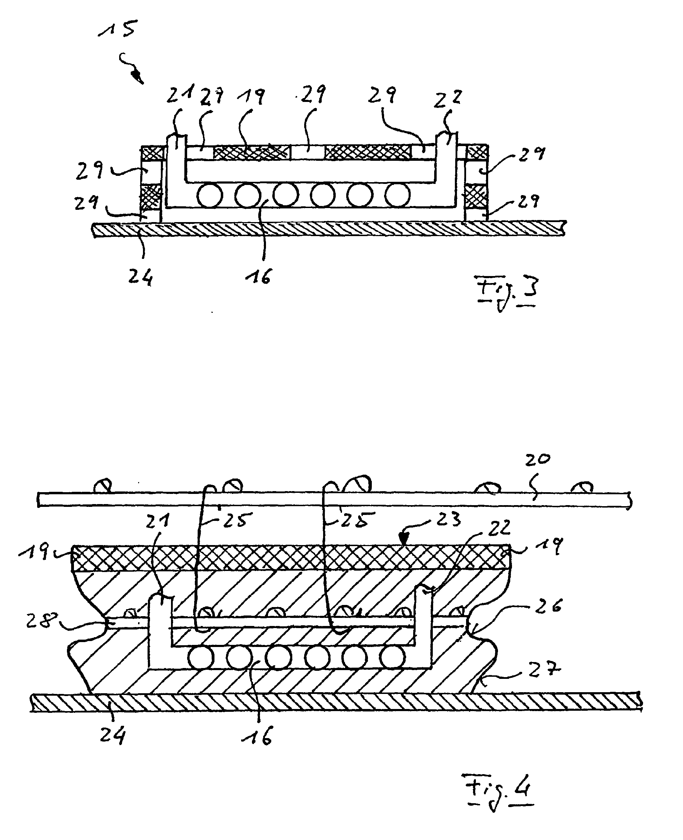

Figur 2 zeigt eine vergrößerte Darstellung des Wärmetauschers 15 und der Betondecke 10 in erster Ausgestaltung. Das Rohrregister 14 der Betondecke 10 weist einen Zufluß 17 und einen Abfluß 18 auf. Das Rohrregister 16 des Wärmetauschers 15 ist mit einer Isolierschicht 19 umgeben. Der Wärmetauscher 15 mit seiner Isolierschicht 19 ist an der Unterseite 31 der Betondecke 10 unterhalb einer unteren Bewehrungsebene 20 angeordnet. Zur Beaufschlagung des Rohrregisters 16 dienen ein eigener Zufluß 21 und ein eigener Abfluß 22. Die Durchströmung des Rohrregisters 16 des Wärmetauschers 15 wird hierbei unabhängig von der Durchströmung der Rohrregisters 14 der Betondecke 10 vorgegeben. Ein unerwünschter Wärmeaustausch zwischen dem Wärmetauscher 15 und der Betondecke 10 wird durch die Isolierschicht 19 vermieden.

Der Wärmetauscher 15 gemäß Figur 2 ist materialeinstückig mit der Betondecke 10 hergestellt. Figur 3 zeigt eine Ansicht vor der Herstellung der Betondecke 10. Die Isolierschicht 19 erstreckt sich um den gesamten vorgesehenen Raum des Wärmetauschers 15 herum und weist Ausnehmungen 29 auf. Die Ausnehmungen 29 ermöglichen ein Durchtreten von flüssigem Beton zur Herstellung der Betondecke 10. Zur Unterseite 31 der Betondecke hin erfolgt ein Abschluß durch eine Deckenschalung 24. Das Rohrregister 16, der Zufluß 21 sowie der Abfluß 22 und die Isolierung 19 werden auf geeignete, nicht näher dargestellte Weise fixiert. Nach dem Einbringen der unteren Bewehrungslage 20 sowie des Rohrregisters 14 für die Betondecke 10 und gegebenenfalls einer oberen Bewehrungslage sowie Abstandsböcken erfolgt das Vergießen des Betons. Nach dem Aushärten kann die Deckenschalung 24 entfernt und ein Verputz oder Farbe aufgebracht werden.

Bei der Darstellung gemäß Figur 2 erstreckt sich das Rohrregister 14 der Betondecke 10 auch in den Bereich, in dem der Wärmetauscher 15 angeordnet ist. Die Isolierschicht 19 ist zwischen dem Wärmetauscher 15 und dem Rohrregister 14 angeordnet. Das Rohrregister 14 kann daher anders temperiert werden als der Wärmetauscher 15, wobei Wechselwirkungen minimiert werden. Alternativ kann der Bereich des Wärmetauschers 15 ausgespart werden. Das Rohrregister 14 ist dann nur an den Stellen vorhanden, an denen kein Wärmetauscher 15 eingebettet ist.

Eine alternative Ausgestaltung ist in Figur 4 dargestellt. Hier ist der Wärmetauscher 15 als vorgefertigtes Element 23 ausgebildet, das in die Betondecke 10 eingießbar ist. Das Element 23 ist mittels Trägern 25 von der unteren Bewehrungslage 20 der Betondecke abgehängt. Es weist weiter Hinterschneidung 26, 27 zur Fixierung in der Betondecke auf. Zur Erhöhung der Stabilität des Elements 23 ist eine eigene Bewehrungslage 28 vorgesehen. Die Träger 25 sind vorteilhaft an diese Bewehrungslage 28 befestigt.

Bei dem Element 23 ist nur an der Oberseite eine Isolierschicht 19 vorgesehen. Es wird dennoch eine ausreichende thermische Abschirmung gegenüber der Betondecke 10 erreicht. Grund hierfür ist, daß keine materialeinstückige Verbindung zwischen dem Element 23 und der Betondecke 10 besteht. Auch bei dem Element 23 ist ein eigenes Rohrregister 16 mit einem Zufluß 21 und einem Abfluß 22 vorgesehen.

Der Wärmetauscher 15 wird unabhängig von der Betondecke 10 von einem Fluid zum Erwärmen oder Abkühlen durchströmt. Es können mehrere Wärmetauscher vorgesehen werden, die zu Gruppen zusammengefaßt und einzeln oder gruppenweise ansteuerbar sein können. Es kann ebenfalls eine manuelle Ansteuerung durch einen Benutzer vorgesehen werden. Die Betondecke 10 übernimmt dann die Grundtemperierung, während lokale Temperaturabweichungen über die Wärmetauscher 15 abgefangen werden. Es kann ein optimales Raumklima erreicht werden. Heiz- oder Kühlkörper vor den Glasflächen 12 oder im Bereich der Rückwand 13 sind nicht mehr erforderlich. Neben einem verbesserten optischen Eindruck ergibt sich somit auch mehr zur Verfügung stehender Raum. Die Oberseite 30 der Betondecke 10 wird für die lokale Temperierung nicht genutzt. Sie kann daher ohne weiteres mit einer separaten Deckschicht, beispielsweise zur Führung von Kabeln, versehen werden.

## Patentansprüche

1. Bauteilanordnung mit einem Bauteil zur Begrenzung eines Raumes (32), insbesondere Betondecke oder Wand, mit einem ersten Rohrregister (14), das zur Temperierung des Raums (32) von einem Fluid durchströmbar ist, **gekennzeichnet durch** mindestens einen Wärmetauscher (15), in dem Bauteil der beabstandet zu dem ersten Rohrregister (14) an einer dem Raum (32) zugewandten Fläche (31) des Bauteils (10) angeordnet ist und die Fläche (31) zur lokalen Temperierung des Raumes (32) teilweise überdeckt, wobei zwischen dem Wärmetauscher (15) und dem ersten Rohrregister (14) eine Isolierschicht (19) zur thermischen Isolierung angeordnet ist.

2. Bauteil anordnung nach Anspruch 1, **dadurch gekennzeichnet, daß** die Isolierschicht (19) den Wärmetauscher (15) an allen Seiten mit Ausnahme der dem Raum (32) zugewandten Fläche (31) umgibt.

3. Bauteil anordnung nach Anspruch 1 oder 2, **dadurch gekennzeichnet, daß** der Wärmetauscher (15) ein zweites Rohrregister (16) aufweist, das zur lokalen Temperierung des Raumes (32) unabhängig von dem ersten Rohrregister (14) von einem Fluid durchströmbar ist.

4. Bauteil anordung nach einem der Ansprüche 1 bis 3, **dadurch gekennzeichnet, daß** sich das erste Rohrregister (14) entlang der gesamten dem Raum (32) zugewandten Fläche (31) erstreckt, wobei vorzugsweise der Bereich des Wärmetauschers (15) ausgespart ist.

5. Bauteil anordung nach einem der Ansprüche 1 bis 4, **dadurch gekennzeichnet, daß** der Wärmetauscher (15) materialeinstückig mit dem Bauteil (10) ausgebildet ist.

6. Bauteil anordnung nach Anspruch 5, **dadurch gekennzeichnet, daß** die Isolierschicht (19) Ausnehmungen (29) aufweist.

7. Bauteil anordnung nach einem der Ansprüche 1 bis 4, **dadurch gekennzeichnet, daß** der Wärmetauscher (15) als vorgefertigtes Element (23) ausgebildet ist, das in das Bauteil (10) eingesetzt ist.

8. Bauteil anordnung nach Anspruch 7, **dadurch gekennzeichnet, daß** das Element (23) mindestens eine Hinterschneidung (26, 27) aufweist.

9. Bauteil anordnung nach Anspruch 7 oder 8, **dadurch gekennzeichnet, daß** das Element (23) mittels Trägern (25) an einer Bewehrungslage (20) des Bauteils (10) befestigt ist.

10. Bauteil anordnung nach einem der Ansprüche 6 bis 8, **dadurch gekennzeichnet, daß** das Element (23) eine eigene Bewehrungslage (28) aufweist.

11. Bauteil anordnung nach einem der Ansprüche 1 bis 10, **dadurch gekennzeichnet, daß** zumindest die dem Raum (32) zugewandten Fläche (31) schallabsorbierend ausgebildet ist.

12. Bauteil anordnung nach einem der Ansprüche 2 bis 11, **dadurch gekennzeichnet, daß** das Material des Wärmetauschers (15), welches das Zweite Rohrregister (16) umgibt, schallabsorbierend ausgebildet ist.

## Claims

1. A structural component assembly comprising a structural component for defining a room (32), particularly a concrete ceiling slab or wall, comprising a first tube register (14) which for room (32) temperature conditioning has a fluid flow, **characterized in that that** at least one heat exchanger (15) is provided located in said structural component spaced away from said first tube register (14) on a face (31) of said structural component facing said room (32) and partly covering said face (31) for localized room (32) temperature conditioning, an insulating layer (19) for thermal insulation being disposed between said heat exchanger (15) and said first tube register (14).

2. The structural component assembly as set forth in claim 1, **characterized in that** said insulating layer (19) encloses said heat exchanger (15) on all sides except for said face (31) facing said room (32).

3. The structural component assembly as set forth in claim 1 or 2, **characterized in that** said heat exchanger (15) comprises a second tube register (16) for a fluid flow independent of said first tube register (14) of said structural component for localized temperature conditioning of the room (32).

4. The structural component assembly as set forth in any of the claims 1 to 3, **characterized in that** said first tube register (14) extends along the full extent of said face (31) facing said room (32), the footprint for said heat exchanger (15) being recessed.

5. The structural component assembly as set forth in any of the claims 1 to 4, **characterized in that** said heat exchanger (15) is configured materially integrated in said structural component (10).

6. The structural component assembly as set forth in claim 5, **characterized in that** said insulating layer (19) features openings (29).

7. The structural component assembly as set forth in any of the claims 1 to 4, **characterized in that** said heat exchanger (15) is configured as a prefabricated element for inserting in said structural component (10).

8. The structural component assembly as set forth in claim 7, **characterized in that** said element comprises a relief (26, 27).

9. The structural component assembly as set forth in claim 7 or 8, **characterized in that** said element (23) is secured by means of supports (25) to a rebar layer (20) of said structural component (10).

10. The structural component assembly as set forth in any of the claims 6 to 8, **characterized in that** said element (23) comprises its own rebar layer (28).

11. The structural component assembly as set forth in any of the claims 1 to 10, **characterized in that** at least said face (31) facing said room (32) is configured noise-insulating.

12. The structural component assembly as set forth in any of the claims 2 to 11, **characterized in that** the material of said heat exchanger (15) surrounding said second tube register (16) is configured sound-proofed.

## Revendications

1. Agencement de composant de construction, comportant un composant de construction destiné à délimiter un local (32), en particulier plafond/plancher en béton ou mur, comportant un premier registre tubulaire (14) susceptible d'être traversé par un fluide pour tempérer le local (32), **caractérisé par** au moins un échangeur de chaleur (15) qui est agencé dans le composant de construction à distance au premier registre tubulaire (14) sur une surface (31) du composant de construction (10) tournée vers le local (32) et recouvre partiellement la surface (31) pour la températion localisée du local (32), une couche isolante (19) pour l'isolation thermique étant agencée entre l'échangeur de chaleur (15) et le premier registre tubulaire (14).

2. Agencement de composant de construction selon la revendication 1, **caractérisé en ce que** la couche isolante (19) entoure l'échangeur de chaleur (15) sur tous les côtés, exception faite de la surface (31) tournée vers le local (32).

3. Agencement de composant de construction selon l'une ou l'autre des revendications 1 et 2, **caractérisé en ce que** l'échangeur de chaleur (15) comprend un second registre tubulaire (16) qui est susceptible d'être traversé par un fluide pour la températion localisée du local (32), indépendamment du premier registre tubulaire (14).

4. Agencement de composant de construction selon l'une des revendications 1 à 3, **caractérisé en ce que** le premier registre tubulaire (14) s'étend le long de toute la surface (31) tournée vers le local (32), la zone de l'échangeur de chaleur (15) étant de préférence échancrée.

5. Agencement de composant de construction selon l'une des revendications 1 à 4, **caractérisé en ce que** l'échangeur de chaleur (15) est réalisé d'un seul tenant du même matériau que le composant de construction (10).

6. Agencement de composant de construction selon la revendication 5, **caractérisé en ce que** la couche isolante (19) présente des évidements (29).

7. Agencement de composant de construction selon l'une des revendications 1 à 4, **caractérisé en ce que** l'échangeur de chaleur (15) est réalisé comme élément préfabriqué (23) qui est mis en place dans le composant de construction (10).

8. Agencement de composant de construction selon la revendication 7, **caractérisé en ce que** l'élément (23) comprend au moins une contre-dépouille (26, 27).

9. Agencement de composant de construction selon l'une ou l'autre des revendications 7 et 8, **caractérisé en ce que** l'élément (23) est fixé au moyen de supports (25) sur une nappe d'armature (20) du composant de construction (10).

10. Agencement de composant de construction selon l'une des revendications 6 à 8, **caractérisé en ce que** l'élément (23) présente une propre nappe d'armature (28).

11. Agencement de composant de construction selon l'une des revendications 1 à 10, **caractérisé en ce qu'**au moins la surface (31) tournée vers le local (32) est réalisée de manière à absorber le son.

12. Agencement de composant de construction selon l'une des revendications 2 à 11, **caractérisé en ce que** le matériau de l'échangeur de chaleur (15) qui entoure le second registre tubulaire (16) est réalisé de manière à absorber le son.
